# EUROPÄISCHE PATENTSCHRIFT

(11) **EP 1 058 625 B1**
(45) Veröffentlichungstag und Bekanntmachung des Hinweises auf die Patenterteilung: **18.09.2002**
(21) Anmeldenummer: 99908655.6
(22) Anmeldetag: 08.03.1999
(51) Int. Cl.: B60J 5/04, B62D 25/10

(54) **TÜR ODER DECKEL FÜR EIN KRAFTFAHRZEUG UND VERFAHREN ZUR HERSTELLUNG SOLCHER**
DOOR OR LID FOR A MOTOR VEHICLE AND METHOD FOR THE PRODUCTION THEREOF
PORTE OU HAYON ARRIERE POUR VEHICULE A MOTEUR ET SON PROCEDE DE FABRICATION

(30) Priorität: 06.03.1998 DE 19809750
(43) Veröffentlichungstag der Anmeldung: 13.12.2000
(73) Patentinhaber: Steyr-Daimler-Puch Fahrzeugtechnik AG & CO. KG, 1010 Wien (AT); Gfrerrer, Johann, 5730 Mittersill (AT)
(72) Erfinder: GFRERRER, Johann, A-5730 Mittersill (AT); HAUSBERGER, Klaus, A-8042 Graz (AT)
(74) Vertreter: Kovac, Werner, Dipl.-Ing.
(86) Internationale Anmeldenummer: AT9900055
(87) Internationale Veröffentlichungsnummer: WO99044847

(56) Entgegenhaltungen:
- EP-A- 0 392 904
- EP-A- 0 530 042
- EP-A- 0 712 746
- DE-A- 3 102 329
- DE-A- 4 407 731
- DE-U- 9 112 280
- US-A- 5 536 060

## Beschreibung

Die Erfindung handelt von einer Türkonstruktion für ein Kraftfahrzeug, die aus einem Türkörper und aus einem inneren Trägersystem besteht. Dabei sind unter Türen nicht nur Seitentüren, sondern auch Heckklappen beziehungsweise Kofferraumdeckel eines Kraftfahrzeuges zu verstehen.

Die Türkörper konventioneller Kraftfahrzeugtüren bestehen im Wesentlichen aus einer Aussenschale und einer Innenschale, dazu kommen noch weitere Blechteile zur Verstärkung und zur Aufnahme von Hilfseinrichtungen, z.B. Fensterführungen und Fensterheber. Die Innenschale bildet rundum die mit der Aussenschale durch Punktschweissen verbundenen Stirnflächen der Tür. Im Falle einer Tür mit Fensterrahmen bilden die beiden Schalen gemeinsam auch diesen.

Die Innenschale ist meist in der Mitte großflächig durchbrochen, um den Hilfseinrichtungen Raum zu bieten. Als Trägersystem, insbesondere zur Verstärkung im Kollisionsfall sind meist noch Verstärkungsträger oder Verstärkungsrahmen aus Metall vorgesehen. Diese sind jedoch schwer, kollidieren mit den Fensterführungen und sind auch wegen ihrer begrenzten Wirkung als Insassenschutz unzureichend.

Insgesamt ist trotz des relativ hohen Gewichtes derartiger konventioneller Türen das spezifische Energieaufnahmevermögen nicht ausreichend, insbesondere nicht zur Erfüllung der kommenden gesetzlichen Auflagen, ihre Steifigkeit und Strukturfestigkeit (z.B. bei Verwindung des Fahrzeuges und damit auch der Tür) ist unzureichend, die Fertigungskosten sind auf Grund der komplexen Konstruktion und der aufwendigen Befestigung der Hilfseinrichtungen hoch, und Geräuschdämmung und Wärmedämmung sind schlecht.

Es sind auch bereits Türkonstruktionen bekanntgeworden, die Kunststoffteile enthalten. Aus der DE 44 07 731 ist eine Tür bekannt, die aus zwei oder drei miteinander verschweissten Schalenteilen aus Faserverbundwerkstoff und einer lösbar an diesen befestigten Aussenhaut besteht. Nachteilig ist daran die komplizierte Formgebung der praktisch die gesamte Tür mit den Aufnahmen für Scharniere und Schloß bildenden Schalenteile aus Verbundwerkstoff und die arbeitsaufwendige Verbindung durch Hochfrequenzschweißen oder Kleben. Trotz der Träger ist die Steifigkeit und der Intrusionswiderstand im Fall einer Seitenkollision der Tür unzureichend. Die lösbare Aussenhaut kann zur Versteifung und Formstabilität der Tür nichts mehr beitragen. Zudem bedeutet diese Lösung ein vollkommenes Abgehen von den üblichen Türkonstruktionen, was eine Neukonstruktion der Tür von Grund auf erfordert.

Aus der EP 712 746 A ist ein Trägersystem für eine Tür bekannt, das alle Hilfsaggregate aufnimmt und dann in die Tür eingesetzt wird. Es besteht jedoch aus gespritztem Kunststoff und bezweckt auch gar keine besondere Verstärkung der Türstruktur.

Aus der DE 31 02 329 A ist eine zusammengesetzte Tür bekannt, bei der ein Türmittelteil der Träger eines Türinnen- und eines Türaussenbleches ist. Der Türmittelteil ist ein schub- und torsionssteifer großflächiger Verbundkunststoffkörper mit einem von zwei Schalen umschlossenen Hartschaumstoffkern, in den zumindest ein Energieabsorbtionskörper eingebettet ist. Der Hartschaumstoffkern verleiht dem Verbundkunststoffkörper wohl eine gewisse Steifigkeit, indem er einem Knicken bei horizontaler Querkraft entgegenwirkt, die jedoch im Kollisionsfall nicht ausreicht. Deshalb ist zusätzlich ein Energieabsorbtionskörper eingebettet, dessen Wirkung auf dem Widerstand beruht, den der Hartschaumstoffkern einer Längung der Wellprofilplatte entgegensetzt. Eine solche Längung - und damit die energieabsorbierende Wirkung - tritt im Kollisionsfall aber erst bei erheblicher Durchbiegung ins Fahrzeuginnere auf, für die bei einer Tür kein Raum zur Verfügung steht. Daran kann auch die erhebliche Dicke des Verbundkunststoffkörpers nichts ändern. Deshalb ist es auch notwendig, ihn zum Träger von Türinnen- und Türaussenblech zu machen. Normalerweise tragen das Türinnen- und das Türaussenblech die innere Verstärkung. Diese Funktionsumkehr erfordert eine komplette Neuentwicklung der gesamten Tür, schließt also die Weiterentwicklung einer bestehenden Tür aus.

Aus der gattungsgemäßen US 5,536,060 A ist schließlich eine Türkonstruktion bekannt, deren verstärkender Türmittelteil im Vertikalschnitt mehrfach gekrümmt ist und als Auflage für die Aussenhaut der Tür dient, und der vorne und hinten um eine Vertikale gefaltet ist, sodass er auch Stirnwände bildet. Dieser Türmittelteil von sehr komplexer Gestalt und deshalb ein aus einem Blech superplastisch geformter Metallteil. Dadurch aber sind die Kraftverhältnisse im Türmittelteil unübersichtlich und die verstärkende Wirkung ist allgemein nur gering, und besonders gering in den bei Kollisionen auftretenden Belastungsfällen.

Der Erfindung liegt somit die Aufgabe zugrunde, eine besonders leichte Türkonstruktion vorzuschlagen, die maximale Formsteifigkeit in allen Richtungen sowie ein Maximum an Energieaufnahme und Intrusionswiderstand mit einfacher Montage der kompletten Tür verbindet und kein Abgehen von dem konventionellen Grundaufbau einer Tür erfordert.

Das wird erfindungsgemäß durch die folgenden Merkmale erreicht:
a) Innen- und Aussenwand in Längsrichtung verlaufende einwärts gerichtete Rippen aufweisen, die miteinander verbunden sind,
b) die Rippen Räume bilden, von denen zumindest einer eine druckfeste Füllung enthält,
c) Innenwand und Aussenwand an ihrer Kontur miteinander verbunden sind und an der gemeinsamen Kontur Aufnahmen für Befestigungsmittel vorgesehen sind, mittels derer das Trägersystem in dem Türkörper befestigt ist.

Es wird somit in den herkömmlichen Türkörper ein erfindungsgemäßer plattenförmiger Körper eingesetzt, der einen großen Teil der Türfläche einnimmt und an dem nebstbei bereits alle Hilfsaggregate montiert sein können. Ein solcher Körper ist durch seine Doppelwandigkeit räumlich und erreicht durch die einwärts gekehrten längsliegenden und miteinander verbundenen Rippen sowie durch die druckfeste Füllung eine besonders große Biegesteifigkeit und Torsionssteifigkeit. Durch die Verteilung von Stoßkräften auf eine größere Fläche wird im Kollisionsfall die Eindringtiefe klein gehalten und einem Beulknicken in der Druckzone entgegengewirkt.

Durch die Verwendung faserverstärkter Kunststoffe kann auch die Kontur, Form und Gestaltung der Innenwand und der Aussenwand auch abweichend von der Ebenen durch Anordnung und Ausrichtung der Verstärkungsfasern den Belastungen und der Form der jeweiligen Tür folgen und der Lage der Befestigungspunkte angepasst werden.

Die Aufnahmen für die Befestigungsmittel sind an der Kontur des Trägersystemes vorgesehen, wo sie den Körper am wenigsten Schwächen und die größtmögliche Entfernung der Befestigungspunkte zueinander erlauben. Durch die Verbindung entlang der gesamten Kontur wird nicht nur die höchste Torsionssteifigkeit erreicht, sondern auch das Eindringen von Feuchtigkeit verhindert. Da die Befestigung am Türkörper nur punktweise über integrierte Aufnahmen erfolgt, werden die Kräfte kontrolliert weitergeleitet und der Einbau kann einfach und ohne mühsames Einpassen, auch in einen nur geringfügig modifizierten konventionellen Türkörper, erfolgen.

In einer vorteilhaften Ausbildung der Erfindung ist zwischen innerer und äusserer Wand ein leichtes druckfestes Kernmaterial vorgesehen (Anspruch 2), das zusätzlich auch noch schalldämmend sein kann. Ein solches erhöht die Beulsteifigkeit und den Intrusionswiderstand bei quer zur Türebene erfolgender Kollision. Dieses Kernmaterial kann Wabenstruktur haben oder ein Schaum sein (Anspruch 3). Wenn dieser thermisch aktivierbar ist (Anspruch 4), kann dadurch beim Pressen ein innerer Überdruck erzeugt werden, was die Steifigkeit weiter erhöht. Das Kernmaterial kann aber auch ein Leichtholz (z.B. Balsaholz) sein (Anspruch 5), was nebstbei noch den Vorteil besonders guter Schall- und Wärmedämmung hat.

Zur weiteren Verbesserung des Kollisionsverhaltens können die Wände in stark belasteten Zonen entsprechend orientierte und dimensionierte Verstärkungen enthalten (Anspruch 6). Diese können aus Metall bestehen und auch in die Matrix eingebettet sein. Wenn die Verstärkungen hochfeste Verstärkungsfasern (etwa aus Kevlar) enthalten, werden Verformungsenergieaufnahmewerte erreicht, die auch den strengsten Anforderungen der Zukunft genügen oder bei gleicher Festigkeit eine sehr geringe Dicke aurweisen.

In einer vorteilhaften Ausführung sind die Aufnahmen Gewindebüchsen, deren Gewindeachse in der Längsebene liegen (Anspruch 7), dadurch sind die Befestigungspunkte des Körpers montagegünstig an den Stirnwänden des Türkörpers.

Mit Vorteil sind die Aufnahmen an den Stellen der Scharniere und des Türschlosses vorgesehen, sodaß die Kraftlinien vom Türkörper ferngehalten werden, und sind die Aufnahmen für die Befestigungsmittel mit seitlichen Schultern versehen, um die die Verstärkungsfasern bzw Prepregs herumgelegt sind (Anspruch 8), was eine direkte Krafteinleitung von den Befestigungsmitteln in die Fasern bewirkt, ohne diese zu schwächen. Das ist, wie noch zu zeigen, für das Einbringen einer Vorspannung (Anspruch 9) bei der Herstellung wichtig.

Gegenstand der Erfindung ist auch noch ein Verfahren zur Herstellung von Türen beziehungsweise Deckeln für ein Kraftfahrzeug das in folgenden Schritten abläuft:
a) Auflegen drapierfähiger Prepregs und ggf der Verstärkungen der Innen- oder Aussenwand in die Form,
b) Einlegen des Kernmateriales in die dafür bestimmten Räume,
c) Auflegen der drapierfähiger Prepregs und ggf der Verstärkungen der Aussen- oder Innenwand,
d) Einlegen der Aufnahmen,
e) Schließen der Form und Zusammenpressen bei erhöhter Temperatur.
Um die Wände des Trägersystemes - nach der Art einer Spannbetonbrücke - vorzuspannen, und ihnen so eine besonders hohe Steifigkeit zu verleihen, werden die Aufnahmen einwärts verschoben eingelegt und ihre Schultern von den Enden einzelner Prepregs umschlungen, werden nach dem Schließen der Form an den Aufnahmen auswärts wirkende Zugkräfte ausgeübt, wodurch diese in ihre vorgesehene Lage gebracht werden und dabei die Prepregs vorspannen, und wird erst dann die Temperatur erhöht (Anspruch 10).

Im Folgenden wird die Erfindung anhand von Abbildungen beschrieben und erläutert. Es stellen dar:
- Fig. 1:: Eine Seitenansicht einer Türe mit der erfindungsgemäßen Konstruktion von innen in einer ersten Ausführungsform,
- Fig. 2:: Einen Vertikalschnitt nach II-II in Fig.1,
- Fig. 3:: Einen Horizontalschnitt nach III-III in Fig. 1,
- Fig. 4:: Eine Seitenansicht eines Trägersystemes in der erfindungsgemäßen Konstruktion von innen in einer abgewandelten Ausführungsform,
- Fig. 5:: Einen Vertikalschnitt nach V-V in Fig.4,
- Fig. 6:: Detail VI in Fig.5, vergrößert,
- Fig. 7:: Detail VII in Fig.3, vergrößert,
- Fig. 8:: Detail VIII in Fig.5, vergrößert,
- Fig. 9:: Detail IX in Fig.1 in axonometrischer Darstellung,
- Fig.10:: Einen schematischen Schnitt zum Herstellungsverfahren in einer ersten Phase,
- Fig.11:: Wie Fig.10, in einer zweiten Phase.

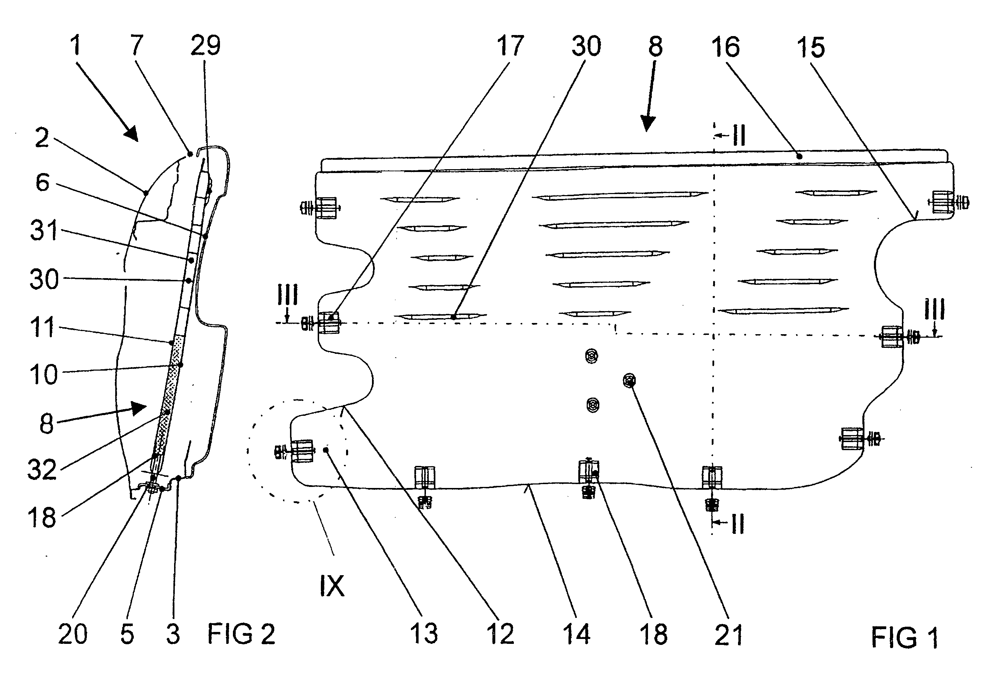

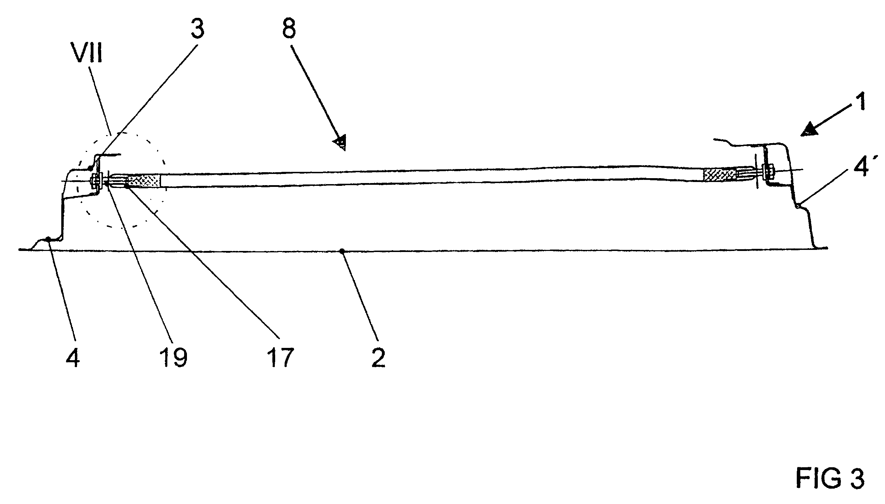

In den Figuren 2 und 3 ist der Türkörper summarisch mit 1 bezeichnet. Er gleicht weitgehend dem in einer konventionellen Tür verwendeten Türkörper und besteht aus einem Aussenblech 2, einem Innenblech 3 und einer inneren Verkleidung 6. Eines der beiden Bleche 2,3, hier das innere, ist rechtwinkelig (auswärts) gefaltet und mit dem anderen Blech, meist durch Punktschweißen, verbunden. Die gefalteten Teile bilden Stirnwände 4 (vorne) und 4' (hinten), siehe Figur 3, und eine Bodenwand 5, siehe Figur 2. Zwischen Aussenblech und Innenblech 2,3 kann ein Schlitz 7 für den Durchtritt eines nicht dargestellten versenkbaren Fensters vorgesehen sein.

Mit 8 ist das erfindungsgemäße Trägersystem bezeichnet, das ein plattenförmiger Kasten mit der Form der Tür angepassten Konturen ist. Es ist zwischen Aussenblech 2 und Innenblech 3 angeordnet, an den Stirnwänden 4,4' und der Bodenwand 5 befestigt und reicht im wesentlichen über den gesamten unteren, fensterlosen, Teil der Tür bzw. Heckklappe eines Kraftfahrzeuges.

In Figur 1,2 und 3 ist die Form des Trägersystemes 8 zu sehen. Es besteht im wesentlichen aus einer Innenwand 10 und einer Aussenwand 11, deren Kontur gebildet wird von einer Vorderkante 12 mit Lappen 13, einer Unterkante 14, einer Hinterkante 15 und einer Oberkante 16. Die beiden Wände 10,11 sind entlang der Kontur 12,14,15 miteinander verbunden. An verschiedenen Stellen der Kontur 12,14,15 sind Aufnahmen 17,18 eingelassen. Die Aufnahmen 17 sind in dem Lappen 13 in der Nähe der nicht dargestellten Scharniere der Tür vorgesehen, sie nehmen Befestigungsmittel 19 auf, mit denen sie in dem Türkörper 1 befestigt sind. Ebenso sind an der Unterkante 14 Aufnahmen 18 vorgesehen, die Befestigungsmittel 20 zur Verbindung mit der Bodenwand 5 des Türkörpers 1 aufnehmen.

Weiters sind Inserts 21 (Figur 1) für verschiedene mechanische oder elektrische Komponenten der Tür, beispielsweise für einen nicht dargestellten Fensterheber in das Trägersystem 8 eingelassen. Die Wände 10,11 bestehen aus endlos faserverstärkten Duromeren oder Thermoplasten, die als Halbzeug in Form von Prepregs, vorzugsweise drapierfähige Prepregs, oder als Naßlaminate vorliegen. Diese weisen Faservolumengehalte von 40 bis 70 % auf, wobei die Fasern in bestimmten Richtungen (beispielsweise 0°, 90°. + 30°, -30°, + 45°, - 45°) orientiert sind. Diese Prepregs werden entsprechend der Größe und Richtung der zu erwartenden Belastungen aufgelegt, sodaß ein anisotroper Laminataufbau entsteht. Wenn die Form der Wände 10,11 von der ebenen Form abweicht, werden die Prepregs in eine entsprechende Form eingelegt, wobei ihnen ihre Drapierfähigkeit zustatten kommt.

Als Fasermaterialien werden Kunststoffasern, Glasfasern, Aramidfasern, Kevlarfasern, Basaltfasern, thermoplastische Fasern oder Mischgarne eingesetzt. Sie können vorgespannt sein. Als polimere Kunststoffmatrix werden beispielsweise warmhärtende Harze z.B. Epoxidharze (EP), Polyesterharze (UP), Vinylesterharze (VE) oder Phenolharze (PF) verwendet. Geeignete thermoplastische Matrixwerkstoffe sind Polyetherketon (PEEK), Polyethersulfon (PES), Polypropylen (PP) oder Poliimide oder Polyamide mit extrem hoher Bruchdehnung. Die dauerhafte und stabile Verbindung sämtlicher Komponenten entsteht während des Preßvorganges durch Verkleben des in den Prepregs enthaltenen Harzes. Dazu ist kein eigener Kleber erforderlich, weil die Prepregs während des Preßvorganges bei erhöhter Temperatur selbst verkleben.

An besonders stark beanspruchten Stellen könnten noch zusätzlich Verstärkungen aus Metall oder Verstärkungslagen 29 mit Spezialfasern (Fig.2) vorgesehen sein. Die beiden Wände 10,11 weisen, vorzugsweise in der oberen Region des Trägersystemes, längsliegende Rippen 30 auf, die sich beim Pressen miteinander verbinden, was besonders die Verdrehsteifigkeit erhöht und wodurch Räume 31,32 gebildet werden. Die Rippen können durchlaufend oder unterbrochen sein. Im oberen Teil sind es enge Räume 31, die dicht verschlossen und dadurch mit einem unter Druck stehenden Medium oder einem anderen druckfesten Material füllbar sein können. Im unteren Teil ist der Raum 32 mit einem Kernmaterial gefüllt. Auch die Räume 31 im oberen Teil können mit einem Kernmaterial gefüllt sein, sodaß eine sandwichartige Struktur entsteht.

Dieses Kernmaterial ist druckfest in Richtung quer zum Trägersystem und entweder wabenförmig, oder ein Schaum. Als Schaum geschäumte Leichtmetalle, ausgehärtete Kunststoffschäume oder thermisch aktivierbare Schäume. Letztere erzeugen beim Pressen unter erhöhter Temperatur einen Überdruck in ihrem Raum. Auch Balsaholz ist geeignet. Alle diese Kernmaterialien erhöhen die Steifigkeit, die spezifische Verformungsenergie und den Intrusionswiderstand; nichtmetallische Schäume bieten obendrein den Vorteil besserer Wärme- und Schallisolation.

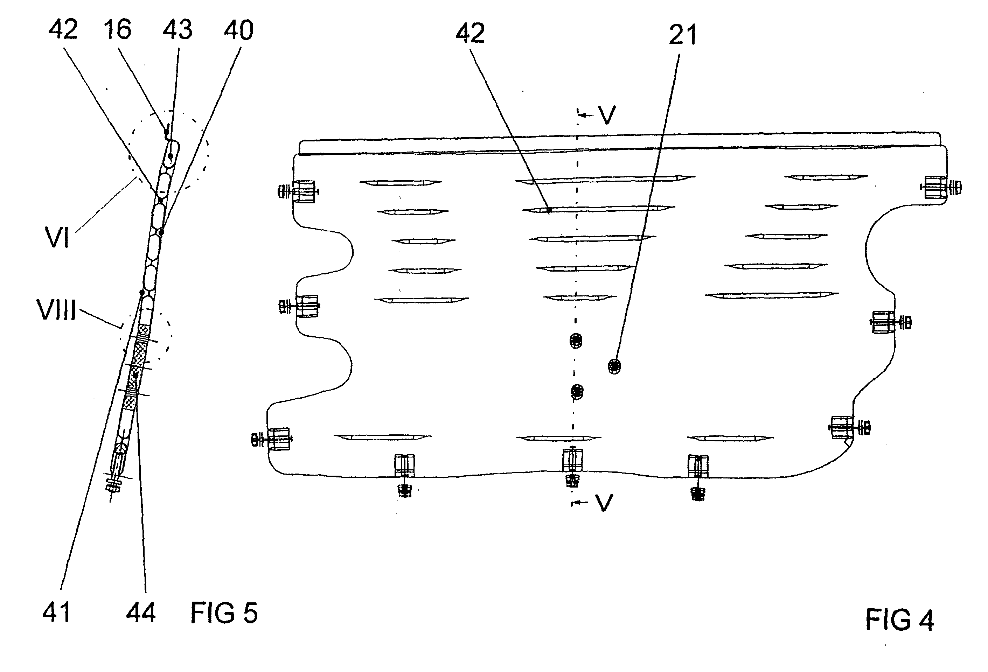

Die Ausführungsform der Figuren 4,5 unterscheidet sich davon nur dadurch, daß die Innenwand 40 und die Außenwand 41 anstelle der Rippen 30 über sich beim Pressvorgang zu durchlaufenden oder unterbrochenen Rippen vereinigende Sicken 42 verfügen, zwischen denen Räume 43 gerundeten Querschnittes entstehen. Der untere Raum 44 ist wieder wie im vorherigen Ausführungsbeispiel mit einem Kernmaterial gefüllt.

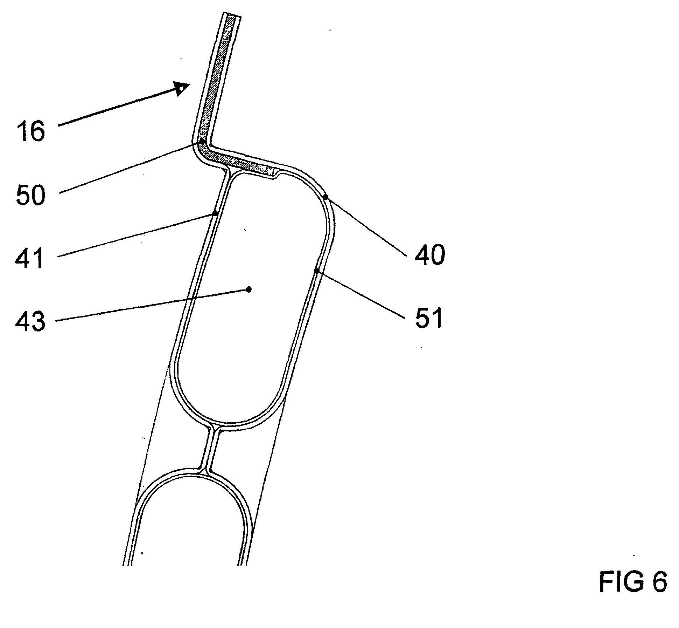

Figur 6 zeigt einen Raum 43 gerundeten Querschnittes vergrößert. In diesem ist ein Schlauch 51 aus einem druckfesten Material eingelegt, der mit einem unter Druck stehenden Fluidum, Gas oder Flüssigkeit, gefüllt ist. Dazu wird entweder beim Einformen ein gefüllter Schlauch eingelegt oder das Druckfluid dem Schlauch von aussen durch einen dünnen Schlauch zugeführt, der, nach Art einer Nabelschnur, beim Verpressen der beiden Wände abgeklemmt wird.

Ebenso kann der Raum 43 mit einem thermisch aktivierbaren Schaum gefüllt sein, der durch die Temperaturerhöhung beim Verpressen weiter reagiert und dadurch ebenfalls einen inneren Überdruck erzeugt. Es ist auch möglich, die schaumbildenden Komponenten erst in der Presse einzuführen. Weiters ist in Figur 6 zu sehen, daß die beiden Wände 40,41 über der Kammer 43 unter Zwischenlage einer Verstärkung 50, die aus Leichtmetall, Holz oder Kunststoff bestehen kann, zusammengeführt sind und so die Kontur des Trägersystems an der Oberkante 16 bilden.

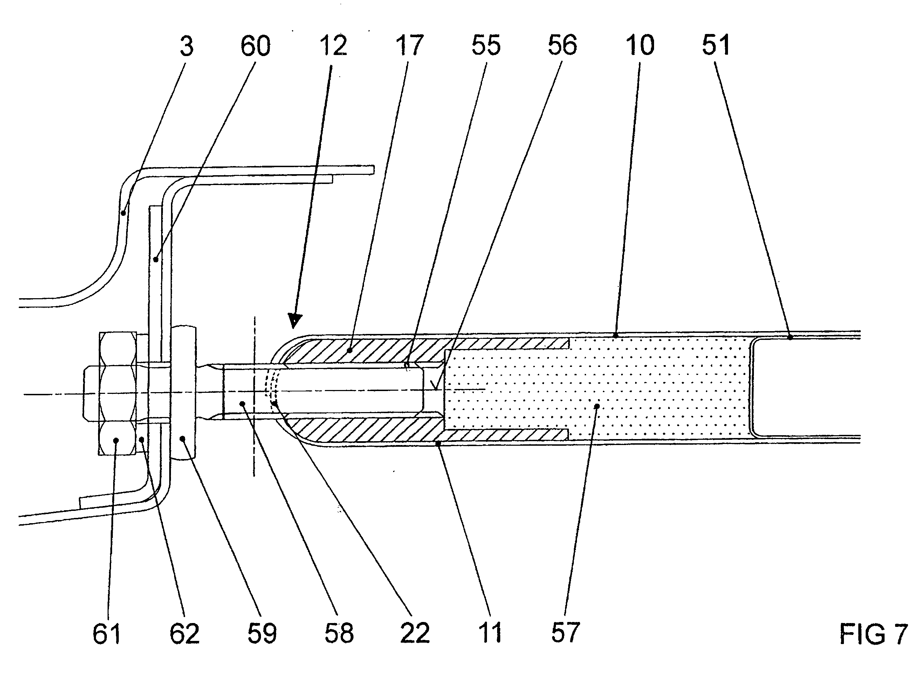

Figur 7 zeigt im Detail eine Aufnahme 17 an der Vorderkante des Trägersystemes, wo Innenwand 10 und Aussenwand 11 miteinander verbunden sind. Die Aufnahme 17 ist dort, in noch zu beschreibender Weise mit den Fasern bzw dem Prepreg verbunden, fest mit dem Trägersystem verbunden. Sie weist innen ein Gewinde 55 auf, dessen Achse 56 im wesentlichen in der Ebene des Trägersystemes liegt und ist nach rechts zuerst von einem Schaumpolster 57 und dann beispielsweise von einem druckgefüllten Schlauch 51 gefolgt. In das Gewinde 55 sind Schraubenbolzen 58 als Verbindungssystem eingeschraubt, deren Bund 59 auf einer Seite eines Verstärkungsbleches 60 des Innenbleches 3 des Türkörpers 1 anliegt. Dazu ist eine Mutter 61 mit Sicherungsscheibe 62 vorgesehen. Mittels der Schraubbolzen (58) kann das Trägersystem leicht vorgespannt werden.

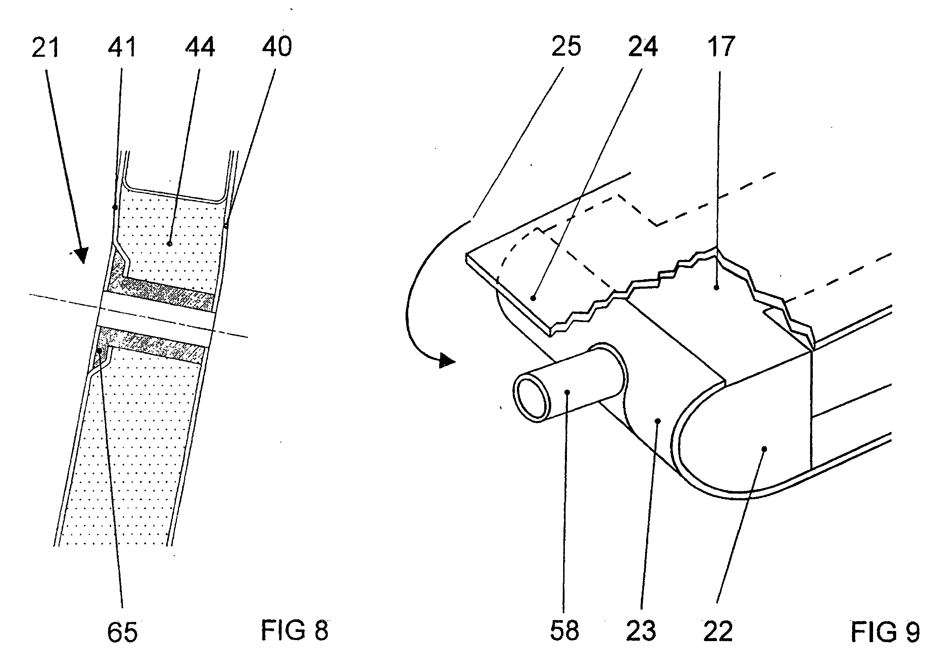

Figur 8 zeigt schließlich noch im Detail die Inserts 21, die vor dem Verpressen in das Trägersystem 8 eingelegt werden, dazu besitzen sie auf mindestens einer Seite einen Senkkopf 65. Der sie umgebende Raum 44 ist mit einem der beschriebenen Kernmaterialien gefüllt.

Fig.9 zeigt, wie die Aufnahme 17 mit den Fasern bzw dem Prepreg verbunden ist. Die Aufnahme weist seitliche Schultern 22 auf, um die die Enden 23,24 der Prepregs, zuerst das untere 23 und dann darüber das obere 24 geschlungen werden (Pfeil 25). Ein Loch 24 kann vorgesehen sein, durch das der Schraubbolzen 58 hindurchtreten kann.

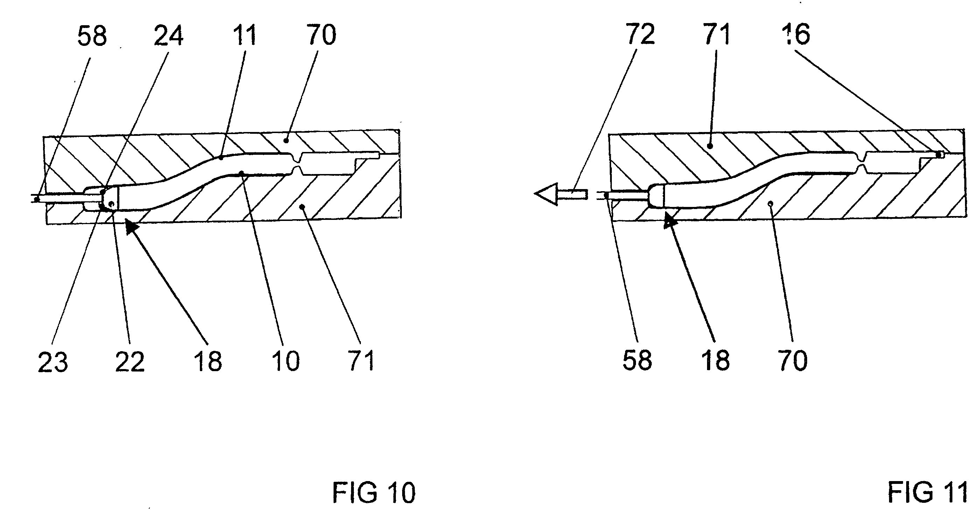

Die Herstellung des Trägersystems 8 erfolgt nach dem an sich bekannten Prepreg-Molding-Verfahren in einer aus Oberteil 70 und Unterteil 71 bestehenden Form, wobei jedoch die Vorspannung auf besonders einfache Weise hergestellt wird: Beim Einformen. werden die Aufnahmen 17,18 nicht an ihren Platz gelegt, sondern, wie in Fig.10 gezeigt, um ein Stück nach innen verschoben. Dann werden die Enden 23,24 der Prepregs fest um die Schultern der Aufnahmen 17,18 geschlungen. Sodann wird die Form 70,71 geschlossen, die Schraubenbolzen 58 eingeschraubt und an diesen eine Zugkraft (Pfeil 72) angelegt. Durch diese werden die Aufnahmen nach aussen an den vorgesehenen Platz gezogen, wobei sie den Fasern eine Vorspannung verleihen. Das geschieht an allen Aufnahmen 17,18 gleichzeitig.

## Patentansprüche

1. Tür/Deckelkörper für ein Kraftfahrzeug bestehend aus einem von einem Innenblech und einem Aussenblech gebildeten Türkörper und aus einem Trägersystem (8), das ein im Türkörper (1) befestigter doppelwandiger plattenförmiger Körper hoher Festigkeit ist, dessen Innenwand (10;40) und Aussenwand (11;41) aus faserverstärktem Kunststoff bestehen und entlang ihrer Kontur (12,14,15) miteinander verbunden sind, **dadurch gekennzeichnet, daß**
a) Innen- und Aussenwand in Längsrichtung verlaufende einwärts gerichtete Rippen (30;42) aufweisen, die miteinander verbunden sind,
b) die Rippen Räume (31,32; 43,44) bilden, von denen zumindest einer eine druckfeste Füllung enthält,
c) Innenwand (10;40) und Aussenwand (11;41) an ihrer Kontur (12,14,15) miteinander verbunden sind und an der gemeinsamen Kontur Aufnahmen (17,18) für Befestigungsmittel vorgesehen sind, mittels derer das Trägersystem (8) in dem Türkörper (1) befestigt ist.

2. Tür/Deckelkörper für ein Kraftfahrzeug nach Anspruch 1, **dadurch gekennzeichnet, daß** die zwischen Innenwand (10;40) und Aussenwand (11;41) gebildeten Räume (31,32; 43,44) ein leichtes und quer zu den Wänden druckfestes Kernmaterial enthalten.

3. Tür/Deckelkörper für ein Kraftfahrzeug nach Anspruch 2, **dadurch gekennzeichnet, daß** das Kernmaterial ein metallischer oder polymerer Schaum ist.

4. Tür/Deckelkörper für ein Kraftfahrzeug nach Anspruch 3, **dadurch gekennzeichnet, daß** das Kernmaterial ein thermisch aktivierbarer polymerer Schaum ist.

5. Tür/Deckelkörper für ein Kraftfahrzeug nach Anspruch 3, **dadurch gekennzeichnet, daß** das Kernmaterial ein Leichtholz ist.

6. Tür/Deckelkörper für ein Kraftfahrzeug nach Anspruch 1, **dadurch gekennzeichnet, daß** die Wände (10,11) in besonders beanspruchten Zonen entsprechend orientierte und dimensionierte Verstärkungen (29) aufweisen.

7. Tür/Deckelkörper für ein Kraftfahrzeug nach Anspruch 1, **dadurch gekennzeichnet, daß** die Aufnahmen (17,18) an der Kontur (12,14,15) des Formkörpers Gewindebüchsen mit in der Ebene des plattenförmigen Formkörpers (8) liegender Gewin-deachse (56) sind, in die Verbindungselemente (58) zum Türkörper (1) eingeschraubt sind.

8. Tür/Deckelkörper für ein Kraftfahrzeug nach Anspruch 7, **dadurch gekennzeichnet, daß** Aufnahmen (17) an den Stellen der Scharniere und des Türschlosses vorgesehen sind und seitliche Schultern (22) besitzen, um die Enden (23,24) der Prepregs der Innen- und Aussenwand (10,11; 40,41) herumgelegt sind.

9. Tür/Deckelkörper für ein Kraftfahrzeug nach Anspruch 1 **dadurch gekennzeichnet**, die Fasern der Innenwand (10;40) und/oder der Aussenwand (11;41) vorgespannt sind.

10. Verfahren zur Herstellung von Tür/Deckelkörpern für ein Kraftfahrzeug nach einem der Ansprüche 1 bis 9, in folgenden Schritten:
a) Auflegen drapierfähiger Prepregs oder eines Naßlaminates und ggf. der Verstärkungen (29) der Innen- oder Aussenwand (10,11;40,41) in die Form,
b) Einlegen des Kernmateriales in die dafür bestimmten Räume,
c) Auflegen der drapierfähiger Prepregs oder des Naßlaminates und ggf. der Verstärkungen der Aussen- oder Innenwand,
d) Einlegen der Aufnahmen,
e) Schließen der Form und Zusammenpressen bei erhöhter Temperatur,
**dadurch gekennzeichnet, daß**
f) die Aufnahmen (17,18) einwärts verschoben eingelegt und ihre Schultern von den Enden (23,24) einzelner Prepregs oder des Naßlaminates umschlungen werden,
g) nach dem Schließen der Form an den Aufnahmen auswärts wirkende Zugkräfte angebracht werden, wodurch diese in ihre vorgesehene Lage gebracht werden und dabei die Prepregs oder das Naßlaminat vorspannen, und
h) dann erst die Temperatur erhöht wird.

## Claims

1. Door or lid for a motor vehicle consisting of a door body comprising an inner shell and an outer shell and of a support system (8), which is a double walled flat body of high strength fastened in the door body, whose inner wall (10, 40) and outer wall (11, 41) are of fiber-reinforced plastic and are connected to each other along their contour, **characterized by**
a) the inner and the outer walls having longitudinally oriented ribs (30, 42) which are directed inwards and are connected to each other,
b) the ribs creating spaces (31, 32; 43, 44) of which at least one is provided with a compression-proof filling,
c) inner wall (10, 40) and outer wall (11, 41) being connected with one another at their contour (12, 14, 15), fixtures (17, 18) for fastening means being provided on the common contour, by means of which the support system (8) is fastened in the body of the door.

2. Door or lid for a motor vehicle according to claim 1, **characterized by** the spaces (31, 32, 43, 44) created between the inner wall (10, 40) and the outer wall (11, 14) containing a light core material which is compression-proof in a direction across the walls.

3. Door or lid for a motor vehicle according to claim 2, **characterized by** the core material being a metallic or polymeric foam.

4. Door or lid for a motor vehicle according to claim 3, **characterized by** the core material consisting of a polymer foam which can be thermally activated.

5. Door or lid for a motor vehicle according to claim 3, **characterized by** the core material being a light wood.

6. Door or lid for a motor vehicle according to claim 1, **characterized by** the walls (10,11) in heavy stress zones being provided with reinforcements (29) which are orientated and dimensioned accordingly.

7. Door or lid for a motor vehicle according to claim 1, **characterized by** the fixtures (17, 18) on the contour (12, 14, 15) of the laminated body (8) being threaded bushings whose axis (56) are in the plane of the flat laminated body (8), into which bushings connecting elements (58) to the body of the door (1) are screwed.

8. Door or lid for a motor vehicle according to claim 7, **characterized by** the fixtures (17) being provided at the location of the hinges and the door lock and having lateral shoulders (22) over which the ends (23, 24) of the prepregs of the inner and outer walls (10, 11, 40, 41) are wrapped.

9. Door or lid for a motor vehicle according to claim 1, **characterized by** the fibers of the inner wall (10, 40) and/or the outer wall (11, 41) being prestressed.

10. Process for manufacturing the door or lid of a motor vehicle according to claim titles 1 to 10 will be carried out as follows:
a) placing of the prepregs which can be draped or of a wet laminate and if applicable, of the reinforcements (29) of the inner or outer walls (10, 11, 40, 41) in the mould,
b) inserting the core material in the respective spaces provided for this purpose,
c) placing of the prepregs which can be draped or of the wet laminate and if necessary, of the reinforcements of the outer or inner walls,
d) placing the fixtures in position
e) closing of the mould and pressing it together at increased temperature **characterized by**
f) arranging the fixtures (17, 18) displaced towards the inside and wrapping the ends (23, 24) of individual prepregs or of the wet laminate around their shoulders
g) after closing the mould, applying tensile forces acting from outwards on the fixtures, whereby these are brought into the intended position, and the prepregs or the wet laminate are prestressed ,
h) after which the temperature is increased.

## Revendications

1. Corps de portière ou de hayon arrière pour véhicule automobile, se composant d'un corps de portière, formé d'une tôle intérieure et d'une tôle extérieure, et d'un système de support (8), qui est un corps de rigidité élevée; en forme de plaque à double paroi et fixé dans le corps de portière (1), dont la paroi intérieure (10 ; 40) et la paroi extérieure (11 ; 41) sont composées d'une matière plastique renforcée par des fibres et sont reliées entre elles le long de leur contour (12,14, 15), **caractérisé en ce que** :
a) les parois intérieure et extérieure comportent des nervures (30 ; 42) dirigées vers l'intérieur et s'étendant dans une direction longitudinale,
b) les nervures délimitent des espaces (31, 32 ; 43, 44) dont au moins un contient une matière de remplissage résistant à la pression,
c) la paroi intérieure (10 ; 40) et la paroi extérieure (11 ; 41) sont reliées entre elles au niveau de leur contour (12, 14, 15) et des logements (17, 18) pour moyens de fixation sont prévus au niveau du contour commun au moyen desquels le système de support (8) est fixé dans le corps de portière (1).

2. Corps de portière ou de hayon arrière pour véhicule automobile selon la revendication 1, **caractérisé en ce que** les espaces (31, 32 ; 43, 44) ménagés entre la paroi intérieure (10 ; 40) et la paroi extérieure (11 ; 41) contiennent une matière de remplissage légère, résistant à la pression et disposée transversalement aux parois.

3. Corps de portière ou de hayon arrière pour véhicule automobile selon la revendication 2, **caractérisé en ce que** la matière de remplissage est une mousse métallique ou polymère.

4. Corps de portière ou de hayon arrière pour véhicule automobile selon la revendication 3, **caractérisé en ce que** la matière de remplissage est une mousse polymère activable par voie thermique.

5. Corps de portière ou de hayon arrière pour véhicule automobile selon la revendication 3, **caractérisé en ce que** la matière de remplissage est un bois léger.

6. Corps de portière ou de hayon arrière pour véhicule automobile selon la revendication 1, **caractérisé en ce que** les parois (10, 11) comportent des renforts (29) dimensionnés et orientés de façon appropriée dans des zones particulièrement sollicitées.

7. Corps de portière ou de hayon arrière pour véhicule automobile selon la revendication 1, **caractérisé en ce que** les logements (17, 18) au niveau du contour (12, 14, 15) du corps conformé sont des douilles filetées dont l'axe de filetage (56) est disposé dans le plan du corps conformé (8) en forme de plaque, douilles dans lesquelles sont vissés des éléments de liaison (58) au corps de portière (1).

8. Corps de portière ou de hayon arrière pour véhicule automobile selon la revendication 7, **caractérisé en ce qu'**il est prévu, aux emplacements des charnières et de la serrure de la portière, des logements (17) qui possèdent des épaulements latéraux (22) et qui sont disposés autour des extrémités (23, 24) des préimprégnés des parois intérieure et extérieure (10, 11 ; 40, 41).

9. Corps de portière ou de hayon arrière pour véhicule automobile selon la revendication 1, **caractérisé en ce que** les fibres de la paroi intérieure (10 ; 40) et/ou de la paroi extérieure (11 ; 41) sont précontraintes.

10. Procédé de fabrication de corps de portière ou de hayons arrière pour véhicule automobile selon l'une des revendications 1 à 9, comportant les étapes suivantes consistant à :
a) déposer dans le moule des préimprégnés aptes au drapage ou un stratifié humide, et le cas échéant les renforts (29) des parois intérieure ou extérieure (10, 11 ; 40, 41),
b) insérer la matière de remplissage dans les espaces qui lui sont destinés,
c) déposer les préimprégnés aptes au drapage ou le stratifié humide et le cas échéant les renforts des parois intérieure et extérieure,
d) insérer les logements,
e) fermer le moule et comprimer celui-ci à température élevée,
**caractérisé en ce que**
f) les logements (17, 18) sont insérés en étant déplacés vers l'intérieur, et leurs épaulements sont enlacés depuis les extrémités (23, 24) des préimprégnés individuels ou du stratifié humide,
g) après la fermeture du moule, des forces de traction agissant vers l'extérieur sont appliquées sur les logements de façon à les placer dans leur position prévue en exerçant une précontrainte sur les préimprégnés et le stratifié humide, puis
h) la température est augmentée.
